# EUROPÄISCHE PATENTSCHRIFT

(11) **EP 0 713 473 B1**
(45) Veröffentlichungstag und Bekanntmachung des Hinweises auf die Patenterteilung: **28.01.1998**
(21) Anmeldenummer: 94925466.8
(22) Anmeldetag: 22.08.1994
(51) Int. Cl.: B65D 88/68, B65G 65/46, B01F 7/24

(54) **SYSTEM ZUR HANDHABUNG VON SCHÜTTGÜTERN**
BULK MATERIAL HANDLING SYSTEM
SYSTEME DE MANUTENTION DE MATIERES EN VRAC

(30) Priorität: 20.08.1993 DE 4328071
(43) Veröffentlichungstag der Anmeldung: 29.05.1996
(73) Patentinhaber: Peveling, Arthur, 74523 Schwäbisch Hall (DE)
(72) Erfinder: Peveling, Arthur, 74523 Schwäbisch Hall (DE)
(74) Vertreter: Bohnenberger, Johannes, Dr.
(86) Internationale Anmeldenummer: EP9402780
(87) Internationale Veröffentlichungsnummer: WO9505985

(56) Entgegenhaltungen:
- CH-A- 627 665
- DE-C- 231 750
- FR-A- 1 255 052
- GB-A- 2 071 065

## Beschreibung

Die Erfindung betrifft ein System zur Handhabung von Schüttgütern gemäß dem Oberbegriff des Anspruchs 1.

Schüttgüter, insbesondere schwerfließende Schüttgüter wie Kieselgur, Kieselgel oder Braugips werden meist in Silobehältern aufbewahrt und bei Bedarf entnommen bzw. ausgetragen. Allgemein sollten bei einer Aufbewahrung von Schüttgütern in Silobehältern eine Reihe von Vorgaben berücksichtigt werden, die nachfolgend beschrieben sind.

Werden die Schüttgüter im Lebensmittelbereich verwendet, so müssen die Silobehälter, in denen das Schüttgut aufgenommen ist, relativ hohen Reinheitsvorschriften genügen.

Auch wird der ökologische Gesichtspunkt immer wichtiger. In einigen Ländern müssen sogenannte Verpackungsverordnungen erfüllt werden, wobei an vorderster Stelle immer die Abfallvermeidung steht. Eine einmalige Verwendung von Silobehältern ist somit nicht nur aus Kostengründen unsinnig, sondern auch aus ökologischen Gründen zu vermeiden.

Im übrigen sollte die Handhabung von derartigen Schüttgütern unproblematisch sein. Dabei ist zu beachten, daß Schüttgut innerhalb eines Silos nur im Kernfluß fließt, d.h. das im Silo befindliche Schüttgut läuft silomittig in Richtung eines unten angeordneten Silotrichters, falls dieser eine Auslaufmöglichkeit bietet.

Problematisch dabei ist, daß im Silotrichter der Kernfluß dadurch unterbrochen werden kann, daß sich Schüttgut zwischen den Trichterwänden festsetzt und verspannt. Je nach Auslaufwinkel des Trichters erhöht sich diese Spannkraft. Es bilden sich dabei sogenannte Brücken aus, die eine Austragung von im Silo befindlichem Schüttgut verhindern.

Um die Spannkraft zu reduzieren, ist es bekannt, den Silotrichter in mehrere, z.B. vier gleiche Teile aufzuteilen. Die für diesen Zweck senkrecht ausgebildeten Trennwände tragen gleichzeitig zur Gleitfähigkeit des Schüttgutes im unteren Silobereich bei. Sobald sich jedoch das zu speichernde bzw. auszutragende Schüttgut verdichtet, wird die Fließeigenschaft reduziert oder geht ganz verloren, so daß selbst eine Aufteilung des Silotrichters mit Trennwänden den Fluß des Schüttgutes nicht mehr aufrechterhalten kann. Wenn die Rieselfähigkeit verloren geht, müssen Zusatztechniken eingesetzt werden, da ansonsten eine Austragung der im Silo gespeicherten Schüttgüter nicht mehr möglich ist.

Zum Verhindern bzw. Lösen von Brücken eignen sich keine Rüttler, da diese insbesondere schwerfließende Schüttgüter derart verdichten, daß sie betonartig im Silo festsitzen.

Aus der DD-PS 216 912 ist eine Vorrichtung zum Austrag von feinkörnigem Schüttgut aus einem Aufnahmebehältnis oder Silo bekannt. Die Vorrichtung weist eine pneumatische Fördereinrichtung mit einer Förderleitung und einer am unteren Ende der Förderleitung angeordneten Förderluftzufuhr auf. Die Föderleitung erstreckt sich von einer Guteinlauföffnung nach oben bis über das Silo hinaus. Zur Druckentlastung ist ein Druckentlastungskörper angeordnet, der einen Silo-Auslaufbehälter, in dem auch das untere Ende der Förderleitung angeordnet ist, aufweist. Koaxial um die Förderleitung herum ist eine Entstaubungsleitung vorgesehen, die sich aus einem Hohlraum unter dem Druckentlastungskörper, parallel und konzentrisch zur Förderleitung nach oben erstreckt und knapp unter dem oberen Ende des Silos wieder in den Silo-Innenraum mündet.

Das Schüttgut wird in vorbestimmten Bereichen pneumatisch aufgelockert und dazu segmentweise fluidisiert. Als Nachteile müssen bei dieser Vorrichtung jedoch ein relativ großer Aufwand und eine geringe Dosierfähigkeit des Schüttgutes genannt werden, wobei die Fluidisierungstechnik auch nur bedingt funktioniert.

In der CH-PS 643 510 wird eine Vorrichtung beschrieben, mit der bei heterogenen Flüssigkeiten eine Produktausscheidung und eine Sedimentbildung vermieden werden soll. Zu diesem Zweck wird die gesamte in einem Behälter aufgenommene Flüssigkeit stetig umgewälzt. Um eine besonders gute Durchmischung sicherzustellen ist im unteren Bereich des Behälters zur Reduzierung der Strömungsquerschnitte und besseren Verwirbelung der Flüssigkeit ein Umlenkkörper angeordnet. Mit dieser Vorrichtung kann jedoch keine Brückenbildung verhindert und ein ununterbrochener Kernfluß sichergestellt werden.

Aus der GB-A-2071065 ist ein System zur Handhabung von Schüttgütern gemäß dem Oberbegriff des Patentanspruchs 1 bekannt. Die Lehre dieser Patentanmeldung offenbart ein Silo mit einem trichterförmigen Abschnitt, an dessen unterem Ende eine Öffnung vorgesehen ist. Durch diese Öffnung wird das Schüttgut aus dem Silo ausgetragen. Innerhalb des trichterförmigen Abschnitts ist eine Vorrichtung zum Zuführen des Schüttgutes zu der Öffnung vorgesehen. Diese Vorrichtung weist eine innere Schnecke mit konstanter Neigung an einem Schaft und eine äußere Spirale auf, die an dem Schaft angebracht ist und entlang dem trichterförmigen Abschnitt konisch zur Öffnung hin zuläuft. Die innere Schnecke führt das Schüttgut der Öffnung zu, während die äußere Spirale das Schüttgut entlang des trichterförmigen Abschnitts nach oben befördert. Dadurch wird der inneren Schnecke kontinuierlich von oben Schüttgut zugeführt.

Aus der französischen Patentschrift FR-1255052 ist ebenfalls ein System zur Handhabung von Schüttgütern bekannt. Bei diesem System ist an dem unteren Ende eines trichterförmigen Abschnitts eines Silos eine Öffnung zum Austragen von Schüttgut angeordnet. Im Inneren des Silos ist eine Zirkulationseinrichtung angebracht, die mittig angeordnet ist. Die bekannte Zirkulationseinrichtung fördert Schüttgut von einem unteren Bereich des Silos zu einem oberen Bereich. Das obere Ende der Zirkulationseinrichtung ist offen, so daß das nach oben beförderte Schüttgut beim Austritt aus der Zirkulationseinrichtung wieder in den unteren Bereich des Silos zurückfällt. Bei diesem bekannten System verdichtet sich jedoch ebenfalls das auszutragende Schüttgut, so daß dessen Fließgeschwindigkeit reduziert wird. Eine Bildung von Brücken kann durch die Verwendung der bekannten Zirkulationseinrichtung nicht gänzlich ausgeschlossen werden.

Insgesamt sollen die vorgenannten Probleme gelöst werden. Aufgabe der Erfindung ist es somit, ein System zur besseren Handhabung von Schüttgütern anzugeben.

Diese Aufgabe wird durch die im Anspruch 1 beschriebenen Merkmale gelöst.

Demgemäß ist in einem Silo eine Zirkulationseinrichtung vorgesehen, die eine Adeckung umfaßt, die derart ausgebildet ist, daß das Schüttgut im wesentlichen frei vom Druck des Schüttgutes im Silo aus dem oberen Ende der Zirkulationseinrichtung austragbar ist. Die Zirkulationseinrichtung wirkt mit einer Austragseinrichtung derart zusammen, daß Schüttgut aus der Zirkulationseinrichtung aus dem nach oben geförderten Schüttgut-Strom während des Förderns entnommen werden kann.

Durch die Zirkulationseinrichtung wird das im Silo gespeicherte Schüttgut im Bereich der Zirkulationseinrichtung ständig in Bewegung gehalten. Dadurch kann der eingangs beschriebene Kernfluß fortwährend aufrechterhalten werden. Eine Ausbildung von Brücken im Silo und insbesondere im trichterförmigen Abschnitt wird auf diese Weise wirksam verhindert.

Mittels der Austragseinrichtung kann das Schüttgut ferner genau dosiert aus der Zirkulationseinrichtung entnommen werden. Insgesamt wird also ein Festsetzen von Schüttgut im Silo verhindert und ein Austragen auch kleiner Fördermengen dosiergenau ermöglicht.

Gemäß einer besonders vorteilhaften Ausführungsform ist ein Siloabschnitt, nämlich der eigentliche Aufnahme- und Speicherraum für das Schüttgut, von dem unteren trichterförmigen Abschnitt, aus dem das Schüttgut ausgetragen wird, abnehmbar bzw. auf diesen aufsetzbar. Damit kann der obere Siloabschnitt nach Art einer Kartusche gehandhabt, insbesondere ausgetauscht, werden. Dabei kann ein entleerter, oberer Siloabschnitt abgenommen gereinigt und wieder gefüllt werden. Da lediglich ein einfacher Behälter zu reinigen ist, ist die Reinigung erheblich erleichtert. Ferner ist es auch möglich, den oberen Siloabschnitt, also den eigentlichen Schüttgutbehälter, oftmals zu verwenden, so daß eine Abfallvermeidung gewährleistet ist. Schließlich kann auch ein separater Transportbehälter für das Schüttgut eingespart werden, da der abnehmbare Siloabschnitt ebenfalls als Transportbehältnis verwendet werden kann.

Im übrigen braucht beim Austauschen eines entleerten Siloabschnitts gegen einen befüllten Siloabschnitt nicht mehr das gesamte Silo, also inklusive Auslauftrichter, Austragseinrichtung, Zirkulationseinrichtung, Anschlußrohren etc. ausgewechselt zu werden, sondern nur der auf dem Auslauftrichter angeordnete Teil.

Vorzugsweise ist der abnehmbare bzw. aufsetzbare Siloabschnitt mit einem Absperrorgan ausgerüstet, so daß das mit Schüttgut befüllte Silo bei geschlossenem Absperrorgan problemlos als Schüttguttransportbehälter getrennt vom unteren trichterförmigen Abschnitt verwendet werden kann. Insbesondere soll der abnehmbare Siloabschnitt auf einem entsprechend ausgerüsteten Fahrzeug transportierbar sein.

Um den oberen Siloabschnitt vom unteren, trichterförmigen Abschnitt oder vom entsprechend ausgerüsteten Fahrzeug abnehmen oder auf diese Einrichtungen aufsetzen zu können, ist er vorzugsweise mit Vorrichtungen ausgestatten, die eine entsprechende Handhabung gestatten. Insbesondere sind die Vorrichtungen durch Aufnahmen gebildet, in die komplementär ausgebildete Elemente, vorzugsweise Kufen, eines Transportgerätes, insbesondere eines Gabelstaplers, eingreifen. Somit läßt sich ein abnehmbarer Siloabschnitt problemlos vom trichterförmigen Abschnitt abnehmen und auf das Transportfahrzeug stellen bzw. legen. Ebensoleicht kann der abnehmbare Siloabschnitt bei von der Transporteinrichtung abgenommen und zum Reinigen und Wiederbefüllen transportiert werden.

Da sich schwerfließendes Schüttgut insbesondere im Kernfluß innerhalb eines Silos bewegt, wird die Zirkulationseinrichtung vorzugsweise im Zentrum des Silos angeordnet, so daß beim Betrieb der Zirkulationseinrichtung der Kernfluß aufrechterhalten werden kann.

Eine besonders einfach zu realisierende Zirkulationseinrichtung ist durch eine im wesentlichen vertikal verlaufende Förderleitung gegeben, die eine Fördereinrichtung umfaßt. Durch diese wird das Schüttgut vom unteren Ende der Förderleitung zu ihrem oberen Ende gefördert.

Dabei muß es möglich sein, das von der Fördereinrichtung geförderte Schüttgut aus dem oberen Ende der Förderleitung auszustoßen. Dazu ist die Abdeckeinrichtung vorzugsweise so ausgebildet, daß sie einen unten offenen Mantel umfaßt, der die Förderleitung im wesentlichen konzentrisch umgibt und an seinem oberen Ende durch eine vorzugsweise spitzkegelförmige Kappe verschlossen ist. Durch die spitzkegelförmige Kappe wird dem von oben nach unten fließenden Schüttgut nur ein geringer Widerstand entgegengesetzt.

Bei den vorgenannten, besonders bevorzugten Ausführungsformen kann die Austragseinrichtung dadurch realisiert werden, daß eine Austragsleitung direkt in die Förderleitung der Zirkulationsvorrichtung mündet. Dadurch kann das in der Förderleitung nach oben geförderte Schüttgut unmittelbar in die Austragsleitung geführt und von dieser aus dem Silo gefördert werden.

Dazu ist die Austragseinrichtung vorzugsweise als Saugförderer oder als Schneckenförderer ausgebildet.

Da die Gefahr der Brückenbildung insbesondere in dem sich verjüngenden, trichterförmigen Teil des Silos besteht, erstreckt sich die Zirkulationseinrichtung vorzugsweise im wesentlichen über die gesamte Höhe des unteren, trichterförmigen Abschnitts des Silos.

Wie eingangs bereits erwähnt, kann die Spannkraft des Schüttgutes dadurch reduziert werden, daß der Trichter aufgeteilt wird. Vorzugsweise werden dazu senkrecht verlaufende Trennwände verwendet. Diese Trennwände können zugleich auch dazu benutzt werden, die Zirkulationseinrichtung zu halten und zu stützen, so daß keine zusätzliche Halterung für die Zirkulationseinrichtung benötigt wird.

Eine besonders vorteilhafte Ausführungsform der Erfindung ergibt sich dadurch, daß der untere Bereich des trichterförmigen Abschnitts, aus welchem die Zirkulationseinrichtung das Schüttgut entnimmt, gegenüber dem darüberliegenden Bereichen des Silos absperrbar und abnehmbar ausgebildet ist. Dadurch kann die Spitze bzw. das untere Ende des Silos abgenommen werden, so daß die Zirkulationseinrichtung bzw. zumindest alle beweglichen Teile der Zirkulationseinrichtung zugänglich sind. Damit ist eine einfache und kostengünstige Wartung oder auch Reparatur der erfindungsgemäßen Vorrichtung in kurzer Zeit möglich, wobei kurze Standzeiten sichergestellt werden.

Vorteilhafterweise ist die Zirkulationseinrichtung steuerbar ausgeführt, so daß der Zirkulationsfluß einstellbar ist. Durch die Einstellung des Zirkulationsflusses kann je nach Fließeigenschaften des im Silo gespeicherten Schüttgutes eine Brückenbildung unter Minimierung des Energieaufwandes wirksam verhindert werden.

Ebenso kann die Austragseinrichtung steuerbar ausgeführt sein, so daß der Austragsfluß einstellbar ist. Dadurch kann die Austragsrate des Schüttgutes geregelt werden.

Durch eine Kopplung der Steuerbarkeit von Zirkulationsfluß und Austragsfluß kann der die Zirkulation und der Austrag derart aufeinander abgestimmt werden, daß zu jeder Zeit eine gewünschte Schüttgutmenge genau dosierbar entnommen werden kann. Beispielsweise dann, wenn der Zirkulationsfluß niedriger wäre als der gewünschte Austragsfluß, könnte keine gewünschte Schüttgutmenge pro Zeiteinheit entnommen werden.

Die Erfindung wird nachstehend, auch hinsichtlich weiterer Merkmale und Vorteile, anhand der Beschreibung von Ausführungsbeispielen und unter Bezugnahme auf die beiliegenden Zeichnungen näher erläutert. Die Zeichnungen zeigen in:
- Fig. 1: eine schematische Darstellung eines unteren Teils eines erfindungsgemäßen Systems zur Handhabung von Schüttgütern mit einem Ausführungsbeispiel einer Zirkulations- und Austragseinrichtung,
- Fig. 2: eine stark schematisierte Teilansicht einer alternativen Ausführungsform einer Zirkulations- und Austragseinrichtung,
- Fig. 3: eine stark schematisierte Draufsicht der Zirkulations- und Austragseinrichtung aus Figur 2,
- Fig. 4 und 5: schematische Darstellungen, die den Materialfluß bei einer Zirkulation und bei einer Austragung des Schüttmaterials darstellen, und
- Fig. 6: eine weitere schemaische Darstellung eines Ausführungsbeispiels eines Systems zur Handhabung von Schüttgütern, wobei auf dem unteren, trichterförmigen Abschnitt ein abnehmbarer bzw. aufsetzbarer Siloabschnitt angeordnet ist.

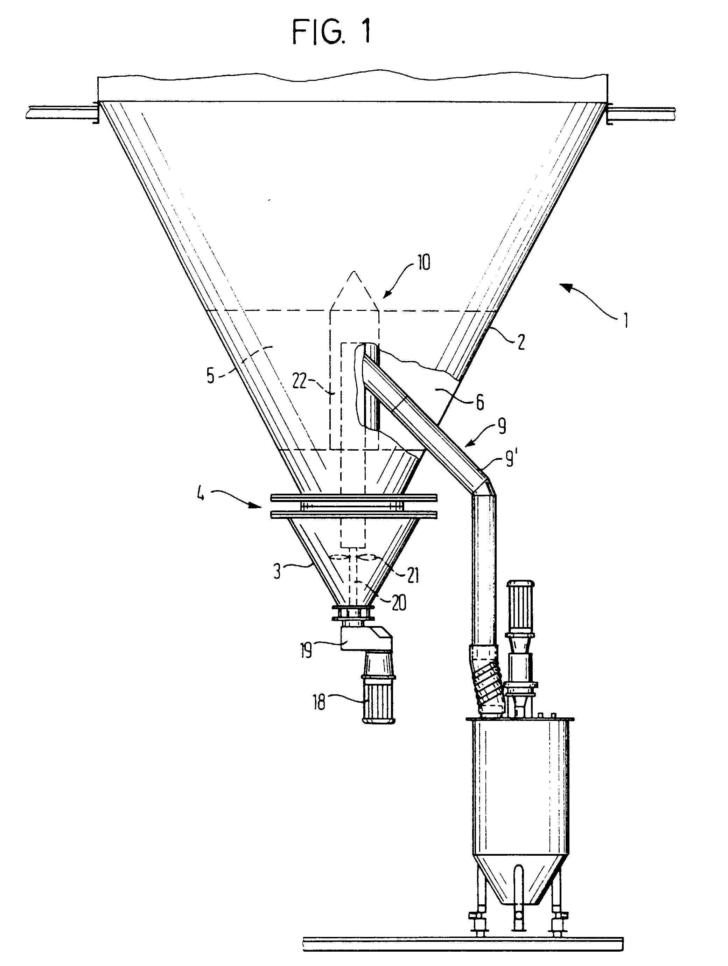

In Figur 1 ist ein unterer Teil, nämlich ein unterer trichterförmiger Abschnitt 2 eines System zur Handhabung von Schüttgütern, insbesondere eines Silos 1, dargestellt. Das Silo 1 dient zur Speicherung und Abgabe von Schüttgut, beispielsweise von Kieselgur, Kieselgel oder Braugips, das zum Teil schwerfließend sein kann.

Beim Austrag aus dem Silo 1 bewegt sich das Schüttgut von oben nach unten in einem sogenannten Kernfluß. Das heißt, nur das in der Silomitte befindliche Schüttgut läuft silomittig in Richtung des trichterförmigen Abschnitts 2, falls dieser eine Auslaufmöglichkeit bietet.

Im trichterförmigen Abschnitt 2 kann sich insbesondere schwerfließendes Schüttgut gegen die konisch zulaufenden Trichterwände verspannen, so daß im ungünstigsten Fall der Kernfluß vollständig unterbrochen wird. Dieser Effekt wird auch als Brückenbildung bezeichnet und ist auf jeden Fall zu verhindern.

Als Vorrichtung zur Unterbindung einer Brückenbildung ist eine Zirkulationseinrichtung 10 vorgesehen, die im trichterförmigen Abschnitt 2 silomittig angeordnet ist.

Die Zirkulationseinrichtung 10 ist in Längsrichtung des Silos ausgerichtet und umfaßt eine konzentrisch zum trichterförmigen Abschnitt 2 angeordnete Förderleitung 11, in der eine Fördereinrichtung 14, beispielsweise eine Schneckenfördereinrichtung, angeordnet ist. Die von der Förderleitung 11 und der Fördereinrichtung 14 gebildete Fördereinheit transportiert das im unteren Endbereich 3 des trichterförmigen Abschitts 2 des Silos 1 befindliche Material von einem unteren Ende 12 der Förderleitung 11 zu deren oberem Ende 13.

Die Fördereinrichtung 14 wird über einen bodenseitig an der Trichterspitze des Abschnitts 2 angeordneten Motor 18, beispielsweise einen Elektromotor, unter Zwischenschaltung eines Getriebes 19 angetrieben. In Figur 1 ist schematisch angedeutet, daß das Getriebe 19 mit der in Figur 1 nicht näher dargestellten Fördereinrichtung 14 (beispielsweise einer Förderschnecke) über eine Welle 20 verbunden ist.

Das untere Ende 12 der Förderleitung 11 definiert den Aufnahmebereich der Fördereinrichtung 14, in dem - wie in Figur 1 angedeutet - Rührflügel 21 an der Welle 20 angeordnet sind, die zur Lockerung, Mischung und Unterstützung der Förderung des Schüttgutes dienen.

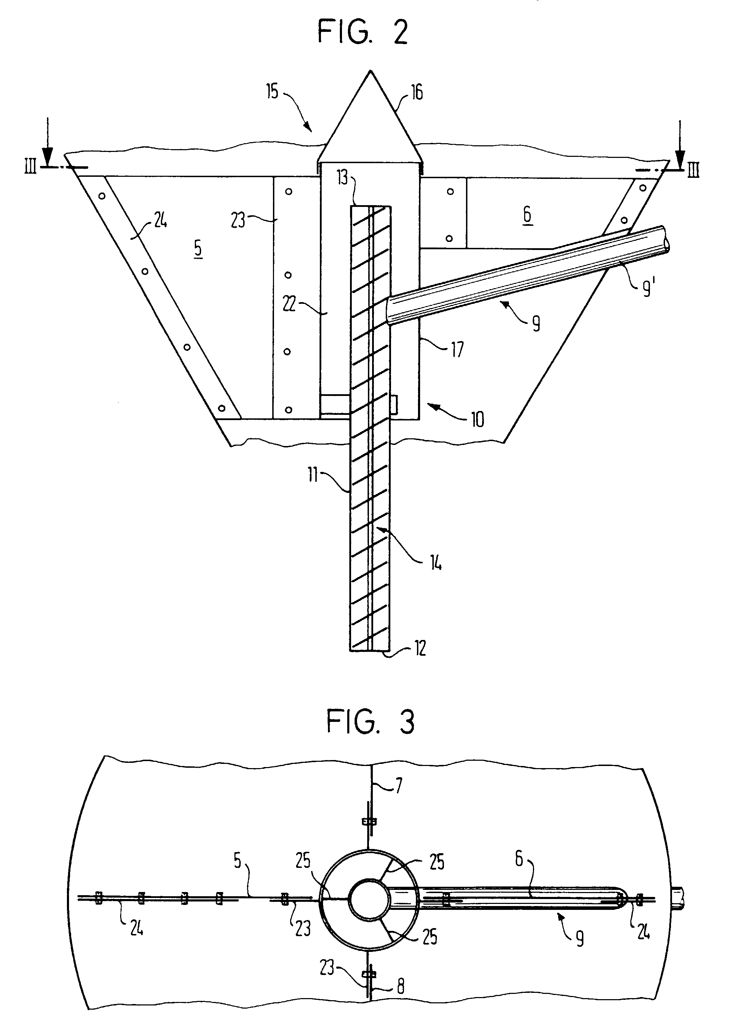

Um einen oberen Bereich der Förderleitung 11 ist eine Abdeckeinrichtung 15 gestülpt, die - wie in den Figuren 1 und 2 zu erkennen ist - aus einem zylindrischen Mantel 17 besteht, der obenseitig durch eine spitzkegelige Kappe 16 verschlossen ist. Die spitzkegelige Kappe 16 gewährleistet einen niedrigen Strömungswiderstand für das Schüttgut.

Die Abdeckeinrichtung 15 ist somit nur nach unten geöffnet. Sie besitzt gegenüber der Förderleitung 11 einen größeren Durchmesser, so daß zwischen Abdeckeinrichtung 15 und Förderleitung 11 ein Ringraum 22 entsteht, über den das obere Ende 13 der Förderleitung 11 mit dem übrigen Siloaufnahmeraum verbunden ist. Ferner ist das obere Ende 13 der Förderleitung 11 derart von der spitzkegelförmigen Kappe 16 beabstandet, daß dazwischen ebenfalls ein Aufnahmeraum gebildet ist.

Die Abdeckeinrichtung 15 ist über Trennwände 5 bis 8 mit dem Silo 1 bzw. dem trichterförmigen Abschnitt 2 verbunden. Die Trennwände 5 bis 8 dienen zur Reduzierung der Spannkraft, die aufgebaut wird, wenn das Schüttgut in den trichterförmigen Abschnitt 2 des Silos 1 gelangt. Sie sind senkrecht ausgerichtet, so daß das Schüttgut ungehindert im trichterförmigen Abschnitt 2 nach unten gleiten kann.

Außenseitig des Mantels 17 der Abdeckeinrichtung 15 sind in Längsrichtung verlaufende Flansche 23 angeordnet. Ebenso sind Flansche 24 an der Innenseite des Silotrichters derart angeordnet, daß die Trennwände 5 bis 8 einerseits an den zugeordneten mantelseitigen Flanschen 23 und andererseits an den entsprechenden trichterseitigen Flanschen 24 befestigbar sind. Die Befestigung kann beispielsweise mittels Schrauben, Nieten oder dgl. erfolgen. Die Trennwände 5 bis 8 halten und stützen so die Abdeckeinrichtung 15. Sie besitzen also Mehrfachfunktion, nämlich die Reduzierung der Spannkraft des Schüttgutes und die Stützung der Abdeckeinrichtung 15.

In Figur 3 ist zu erkennen, daß bei der konkreten, beschriebenen Ausführungsform vier Trennwände 5 bis 8 sternförmig angeordnet sind. Je nach Bedarf können aber auch mehr oder weniger Trennwände angeordnet werden.

Die Förderleitung 11 ist innerhalb des Mantels 17 der Abdeckeinrichtung 15 durch drei sternförmig angeordnete Stützen 25 gehalten (siehe Fig. 3). Die Stützen 25 können sowohl strebenförmig als auch in Form von vertikal verlaufenden Wänden ausgebildet sein.

Im oberen Bereich der Förderleitung 11 zweigt eine Austragsleitung 9' ab, die Teil einer Austragseinrichtung 9 ist. Die Austragsleitung 9' mündet beispielsweise in einen Anmischbehälter, der in Figur 1 rechts unten dargestellt, jedoch nicht näher beschrieben ist.

Beim Ausführungsbeispiel der Figur 1 zweigt die Austragsleitung 9' derart von der Förderleitung 11 ab, daß sie nach unten geneigt ist. Ebenso kann sie - wie in Figur 2 dargestellt ist - nach oben gerichtet weggeführt werden. Zur Unterstützung der später noch zu beschreibenden Förderung des Schüttgutes wird die Austragseinrichtung 9 beispielsweise als Saugförderer oder als Schneckenförderer ausgebildet. Bei der in Fig. 1 dargestellten Ausführungsform kann bei der Förderung des auszutragenden Schüttgutes auch die Schwerkraft ausgenützt werden.

Die unten am Silo 1 angeordnete Spitze des trichterförmigen Abschnitts 2, an dem auch das Getriebe 19 sowie der Motor 18 bodenseitig angeordnet sind, ist abnehmbar befestigt.

Mit der Bezugsziffer 4 ist ein Verbindungsbereich zwischen Trichterspitze und übrigem Trichter bezeichnet, in.dem am oberen Teil des Trichters ein Absperrschieber vorgesehen ist, mit dem der Endbereich 3 des Silos 1, aus welchem die Zirkulationseinrichtung 10 das Schüttgut entnimmt, gegenüber dem darüber liegenden Bereich des Silos 1 abgesperrt werden kann.

Als Absperrschieber kann beispielsweise ein Irisblende vorgesehen werden, die im abgesperrten Zustand die Förderleitung 11 dicht umgibt, so daß kein Schüttgut vom Silo 1 in den Endbereich 3 gelangen kann. Alternativ können auch andere Absperrschieber vorgesehen werden, die eine Absperrung des Endbereichs 3 vom übrigen Silo 1 ermöglichen.

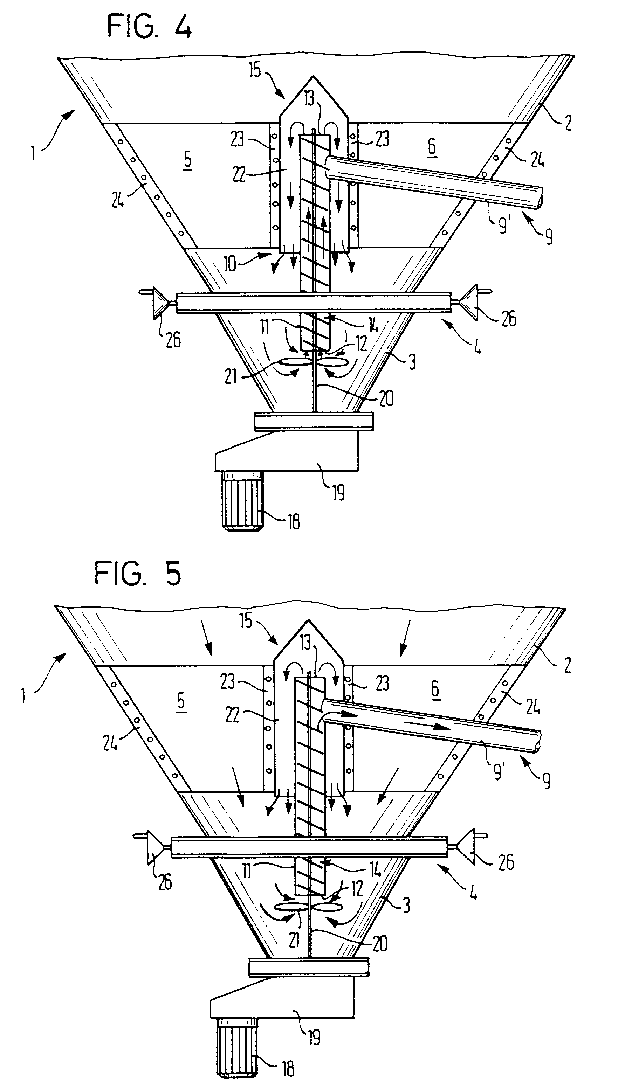

In den Figuren 4 und 5 sind Betätigungseinrichtungen 26, zu erkennen, mit denen sich die Absperreinrichtung betätigen, nämlich offen bzw. schließen, läßt.

Sinn der Absperreinrichtung ist es, daß die Spitze des Silotrichters abnehmbar ist, ohne daß Schüttgut nachfließen kann. Durch das Abnehmen der Trichterspitze sind insbesondere die beweglichen Teile der Zirkulationseinrichtung, beispielsweise die Förderschnecke, auch bei gefülltem Silo 1 leicht zugänglich. Reparatur- oder Wartungsarbeiten sind somit einfach durchführbar, ohne daß die Zirkulationseinrichtung umständlich ausgebaut werden muß.

Anhand den Figuren 4 und 5 wird nachfolgend die Funktionsweise der Vorrichtung zur Entnahme von schwerfließenden Schüttgütern aus dem Silo 1 beschrieben.

Es gibt im wesentlichen zwei Betriebsarten. Zum einen den ausschließlichen Zirkulationsbetrieb und zum anderen den mit dem Zirkulationsbetrieb gekoppelten Austragsbetrieb.

In Figur 4 ist der Zirkulationsbetrieb dargestellt. Vom Aufnahmebereich, der durch das untere Ende 12 der Förderleitung 11 definiert ist, wird Schüttgut in die Förderleitung 11 aufgenommen und von der Fördereinrichtung 14 nach oben transportiert. Am oberen Ende 13 der Förderleitung 11 wird das nach oben transportierte Schüttgut ausgestoßen. Durch die Abschmirmwirkung der Abdeckeinrichtung 15 wird in den Silo 1 befindliches Schüttgut von dem oberen Ende 13 der Förderleitung 11 abgehalten, so daß das in der Förderleitung 11 nach oben geförderte Schüttgut ungehindert in den Raum zwischen Förderleitung 11 und Abdeckeinrichtung 15 austreten kann. Durch den Ringraum 22 gelang das Schüttgut, wie durch die Pfeile in Figur 4 dargestellt ist, in einer Art Kernfluß wieder nach unten, so daß im wesentlichen eine Zirkulation des Schüttgutes im Bereich der Zirkulationseinrichtung 10 erreicht ist. Da insgesammt kein Schüttgut dem Silo 1 entnommen wird, erfolgt kein Materialfluß vom oberen Teil des Silo 1 nach unten. Durch die Aufrechterhaltung der Zirkulation kann jedoch eine Brückenbildung im trichterförmigen Abschnitt 2 des Silos wirkungsvoll verhindert und der Kernfluß aufrechterhalten werden.

In Figur 5 ist der Austragsbetrieb dargestellt. Dabei wird zusätzlich zu der Zirkulationseinrichtung die Austragseinrichtung 9 betrieben. Je nach Ausführungsform der Austragseinrichtung 9 wird beispielsweise die Austragsieitung 9' geöffnet, oder der für die Austragseinrichtung 9 vorgesehene Absaugbetrieb oder Förderschneckenbetrieb wird aufgenommen. Dadurch wird von der Fördereinrichtung 14 in der Förderleitung 11 nach oben gefördertes Schüttgut in die Austragsleitung 9' abgezweigt und aus dem Silo 1 gefördert.

Entspräche die Zirkulationsleistung der Austragsleistung, so würde kein Schüttgutmaterial mehr über den oberen Bereich 13 der Förderleitung 11 gelangen und vollständig über die Austragsleitung 9' der Austragseinrichtung 9 abgeführt werden. Jedoch ist es zur Aufrechterhaltung der Zirkulation erforderlich, die Zirkulationsleistung zumindest geringfügig größer als die Austragsleistung anzusetzen, so daß auch bei Entnahme von Schüttgut immer noch eine Zirkulation des Schüttgutes im trichterförmigen Abschitt 2 des Silos 1 aufrechterhalten werden kann.

Der Materialfluß ist in Figur 5 durch Pfeile dargestellt. Das Schüttgut fließt in einem Kernfluß aus dem oberen Silobereich in den trichterförmigen Abschnitt 2 und wird von der Fördereinrichtung 14 in der Förderleitung 11 nach oben transportiert. Wenn die Förderleistung der Fördereinrichtung größer bemessen ist als die Austragsleistung, wird Schüttgut am oberen Ende der Förderleitung 11 abgegeben und gelangt über den Ringraum 22 wieder nach unten. Gleichzeitig wird Schüttgut aus dem Silo 1 abgeführt.

Je nach Schüttgutbeschaffenheit bzw. dessen Fließeigenschaften kann die Zirkulationsleistung erhöht oder vermindert werden, so daß die Ausbildung von Brücken unter gleichzeitiger Minimierung des dafür notwendigen Energieaufwands sicher verhindert werden kann.

Es ist dabei möglich eine Antriebseinheit für die Siloentnahmetechnik mit einer Frequenzsteuerung auszurüsten, so daß der beschriebene Effekt der Zirkulation im Silotrichter in Verbindung mit der auszubringenden Menge stufenlos regulierbar ist.

Im übrigen können die Leistung der Zirkulationseinrichtung 10 sowie die Leistung der Austragseinrichtung 9 aneinander angepaßt werden, so daß bei einer Erhöhung der Austragsleistung auch die Zirkulationsleistung erhöht wird. Die Austragsleistung kann natürlich nicht über die Zirkulationsleistung ansteigen.

Falls die Dosiergenauigkeit nicht ausreicht, kann das System mit einer Wiegetechnik in Verbindung mit einer Prozeßsteuerung gekoppelt werden, womit Wiegegenauigkeiten von 100 bis 200 g erreicht werden können.

Es ist natürlich klar, daß austelle der vorgenannt beschriebenen Schneckenfördereinrichtung für die Zirkulationseinrichtung 10 auch andere bekannte Fördereinrichtungen verwendbar sind, die Material von unten nach oben befördern können, so daß dieses einer Zirkulation unterworfen ist.

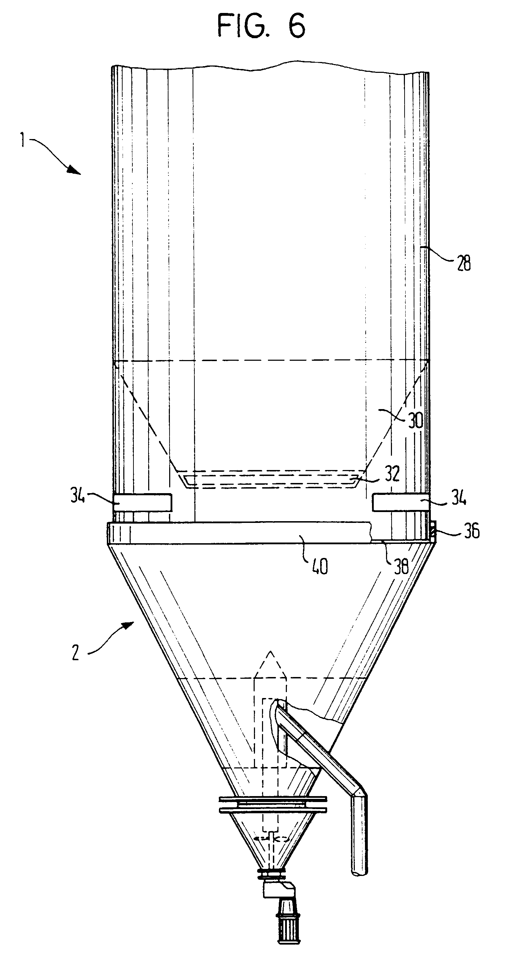

In Fig. 6 ist ein weiteres Ausführungsbeispiel eines System zur Handhabung von Schüttgütern dargestellt. Dieses System umfaßt ein zweiteiliges Silo 1 mit einem unteren, trichterförmigen Abschnitt 2 und einem oberen, auf den trichterförmigen Abschnitt 2 aufsetzbaren bzw. abnehmbaren Siloabschnitt 28, der im wesentlichen zur Aufnahme und Speicherung des Schüttgutes dient.

Im vorliegenden Beispiel ist der obere Siloabschnitt 28 etwa zylinderförmig ausgebildet und weist im Bereich seines unteren Endes einen trichterförmigen Auslaß 30 auf, der durch die gestrichene Linie dargestellt ist und durch den das in dem Siloabschnitt 28 gespeicherte Schüttgut in den trichterförmigen Abschnitt 2 eingeleitet werden kann.

Am Ende des trichterförmigen Auslasses 30 ist - nur schematisch angedeutet - ein Absperrorgan 32, nämlich ein Absperrschieber, vorgesehen, derart, daß der obere Siloabschnitt 28 abschließbar ist. Damit kann dieser Siloabschnitt auch als Transportbehälter verwendet werden. Das Absperrorgan 32 soll so ausgebildet sein, daß es zum einen von außen betätigbar ist, jedoch nicht über die Außenabmessungen des Siloabschnitts 28 übersteht.

Im vorliegenden Beispiel weist der untere, trichterförmige Abschnitt 2 am oberen Ende eine nach oben ragende zylinderförmige Schürze 40 auf, deren Durchmesser etwas größer ist als der Durchmesser des zylinderförmigen Siloabschnitts 28. Wird der Siloabschnitt 28 auf den unteren, trichterförmigen Abschnitt 2 gestellt, so sitzt er auf einer Auflage 38 auf, die in Fig. 6 nicht selbst gezeigt ist. Dabei umfaßt die zylinderförmige Schürze 40 das untere Ende des Siloabschnitts 28. Zwischen der Schürze 40 und dem umfaßten Teil des zylinderförmigen Siloabschnitts 28 ist eine Ringdichtung 36 vorgesehen, so daß bei aufgesetztem Siloabschnitt 28 kein Schüttgut über den Spalt zwischen Schürze 40 und Siloabschnitt 28 austreten kann.

Die Aufnahme, die Auflage und/oder die Abdichtung der einzelnen Siloelemente können auch auf andere Weise ausgeführt und aufeinander abgestimmt sein. Wichtig ist lediglich, daß ein oberer Speicherabschnitt auf dem unteren trichterförmigen Abschnitt 2 derart dicht aufsetzbar ist, daß das Schüttgut ohne an die Umgebung austreten zu können in diesen einführbar ist. Mit einer derartigen Konstruktion ist es möglich, einen einen derartigen Speicherabschnitt gegen einen anderen auszutauschen. Ist der den Speicherabschnitt bildende, abnehmbare Siloabschnitt mit einem Absperrorgan verschließbar, so kann er auch als Transportbehälter verwendet werden. Ferner kann ein vorher gereinigten Siloabschnitt 28 wieder befüllt werden, so daß eine Mehrfachverwendung möglich ist.

Am Verwendungsort wird der Siloabschnitt 28 dann auf den trichterförmigen Abschnitt 2 aufgesetzt und ggf. an diesem fixiert und gesichert.

Zur besseren Handhabung weist der abnehmbare Siloabschnitt 28 Vorrichtungen auf, mittels denen er einfach zu transportieren ist. Beispielsweise können Ösen vorgesehen sein, so das der Siloabschnitt 28 mittels eines Seils von einer Kranvorrichtung auf den trichterförmigen Abschnitt 2 oder aber auf ein entsprechendes Transportfahrzeug aufgesetzt oder von diesen Einrichtungen abgenommen werden kann. Beim vorliegenden Ausführungsbeispiel sind zwei parallel zueinander und horizontal verlaufende Ausnehmungen 34 im unteren Bereich des Siloabschnitts 28 vorgesehen, die rechteckförmigen Querschnitt aufweisen und derart ausgebildet sind, daß die Kufen bzw. Gabelelemente eines Gabelstaplers in sie eingreifen können.

Nach dem Aufsetzen des Siloabschnitts 28 auf den trichterförmigen Abschnitt 2 und ggf. dem Abdichten und Sichern wird das Absperrorgan 34 geöffnet, so daß das im Siloabschitt 28 gespeicherte Schüttgut in den trichterförmigen Abschnitt 2 einfließen kann.

Ist der Siloabschnitt 28 vollständig entleert, wo wird er abgenommen und gegen einen vollen ausgetauscht. Der leere Siloabschnitt 28 kann dann gereinigt und wieder neu befüllt werden.

Auf diese Weise kann man die leeren Siloabschnitte 28 wie Kartuschen austauschen.

Der trichterförmigen Abschnitt 2 muß dagegen nicht ausgewechselt werden. Auch ist es nicht notwendig die Austragsvorrichtung des trichterförmigen Abschnitts 2 bei jedem Austausch des Siloabschnitts 28 vom übrigen System immer wieder ab- und anzuschließen.

Im übrigen kann mit dem vorgenannt beschriebenen System zur Handhabung von Schüttgütern eine Brückenbildung auch bei schwer fließbarem Schüttgut verhindert werden, wobei die Austragsleistung steuerbar und die Austragsmenge genau dosierbar ist. Eine Funktionsunfähigkeit des Silos bzw. der Entnahmevorrichtung wird so wirkungsvoll verhindert.

Insgesamt ein System zur besseren Handhabung von Schüttgütern angegeben.

### Bezugszeichenliste

- 1: Silo
- 2: Trichterbereich
- 3: Endbereich
- 4: Verbindungsbereich
- 5 - 8: Trennwand
- 9: Austragseinrichtung
- 9': Austragsleitung
- 10: Zirkulationseinrichtung
- 11: Förderleitung
- 12: unteres Ende
- 13: oberes Ende
- 14: Fördereinrichtung
- 15: Abdeckeinrichtung
- 16: Kappe
- 17: Mantel
- 18: E-Motor
- 19: Getriebe
- 20: Welle
- 21: Rührflügel
- 22: Ringraum
- 23: Flansche
- 24: Flansche
- 26: Befestigungseinrichtung
- 28: Zylinderförmiger Siloabschnitt
- 30: Trichterförmiger Auslaß
- 32: Absperrorgan
- 34: Ausnehmungen
- 36: Ringdichtung
- 38: Auflage
- 40: Schürze

## Patentansprüche

1. System zur Handhabung von Schüttgütern, umfassend
- ein Silo (1, 28),
- einen sich nach unten verjüngenden, im wesentlichen trichterförmigen Abschnitt (2) am unteren Ende des Silos (1, 28),
- eine Zirkulationseinrichtung (10), die im unteren Abschnitt (2) angeordnet und zur Entnahme von Schüttgut in einem unteren Bereich (3) dieses Abschnitts (2) ausgebildet ist, um es in einen höher gelegenen Bereich des Silos (1, 28) aber unterhalb dessen maximaler Füllhöhe zu fördern, und
- eine Austragseinrichtung (9), die mit der Zirkulationseinrichtung (10) in Verbindung steht und zum Austragen der Stoffe aus dem Silo (1, 28) ausgebildet ist,
**dadurch gekennzeichnet**, daß
- die Austragseinrichtung (9) desweiteren zum Austragen der Stoffe aus dem nach oben geförderten Stoff-Strom während der Zirkulationsförderung aus der Zirkulationseinrichtung (10) ausgebildet ist und daß
- die Zirkulationseinrichtung (10) eine Abdeckeinrichtung (15) umfaßt, die derart ausgebildet ist, daß das Schüttgut im wesentlichen frei von Druck des Schüttgutes im Silo (1, 28) aus dem oberen Ende der Zirkulationseinrichtung (10) austreten kann.

2. System nach Anspruch 1,
**dadurch gekennzeichnet,** daß
das Silo (1, 28) vom unteren Abschnitt (2) abnehmbar und auf diesen aufsetzbar ist.

3. System nach Anspruch 1 oder 2,
**dadurch gekennzeichnet,** daß
ein Absperrorgan (32) am Silo (1, 28) im wesentlichen in dem Bereich vorgesehen ist, in welchem es vom trichterförmigen Abschnitt (2) abnehmbar und auf ihn aufsetzbar ist, wobei das Absperrorgan (32) derart angeordnet und ausgebildet ist, daß das mit Schüttgut befüllte Silo (1, 28) bei geschlossenem Absperrorgan (32) als Schüttguttransportbehälter getrennt vom Abschnitt (2) handhabbar, insbesondere auf einem entsprechend ausgerüsteten Fahrzeug transportierbar ist.

4. System nach Anspruch 2 oder 3,
**dadurch gekennzeichnet,** daß
an dem abnehmbaren Silo (1, 28) Vorrichtungen (34) vorgesehen sind, die zum Handhaben und Transportieren desselben dienen.

5. System nach Anspruch 4,
**dadurch gekennzeichnet**, daß
die Vorrichtungen durch Aufnahmen (34) gebildet sind, in die komplementäre Vorrichtungen eines Transportgerätes, insbesondere Gabelelemente eines Gabelstaplers, zu Transportzwecken eingreifen können.

6. System nach einem der Ansprüche 1 bis 5,
**dadurch gekennzeichnet,** daß
die Zirkulationseinrichtung (10) im wesentlichen im Zentrum des Silos (1, 28) angeordnet ist.

7. System nach einem der Ansprüche 1 bis 6,
**dadurch gekennzeichnet,** daß
die Zirkulationseinrichtung (10) eine Förderleitung (11) umfaßt, in welcher eine Fördereinrichtung (14) derart angeordnet ist, daß das Schüttgut vom unteren Ende (12) der Förderleitung (11) zu ihrem oberen Ende (13) gefördert wird, wobei das obere Ende (12) mit der Abdeckeinrichtung (15) abgedeckt ist.

8. System nach Anspruch 7,
**dadurch gekennzeichnet,** daß
die Abdeckeinrichtung (15) einen unten offenen Mantel (17) umfaßt, der die Förderleitung (11) im wesentlichen konzentrisch umgibt und an seinem oberen Ende durch eine vorzugsweise spitzkegelige Kappe (16) verschlossen ist.

9. System nach Anspruch 7 oder 8,
**dadurch gekennzeichnet,** daß
die Austragseinrichtung (9) eine Austragsleitung (25) umfaßt, die in die Förderleitung (11) mündet.

10. System nach einem der Ansprüche 1 bis 9,
**dadurch gekennzeichnet,** daß
die Austragseinrichtung (9) als Saugförderer ausgebildet ist.

11. System nach einem der Ansprüche 1 bis 9,
**dadurch gekennzeichnet,** daß
die Zirkulationseinrichtung (10) als Schneckenförderer ausgebildet ist, wobei vorzugsweise am unteren Ende der Förderschnecke Rührflügel vorgesehen sind.

12. System nach einem der Ansprüche 1 bis 11,
**dadurch gekennzeichnet,** daß
sich die Zirkulationseinrichtung (10) im wesentlichen über die gesamte Höhe des trichterförmigen Abschnitts (2) erstreckt.

13. System nach einem der vorhergehenden Ansprüche,
**dadurch gekennzeichnet,** daß
die Zirkulationseinrichtung (10) über im wesentlichen senkrecht verlaufende Trennwände (5 bis 8) mit dem trichterförmigem Abschnitt (2) verbunden ist, welche die Spannkraft des Schüttgutes und damit eine Brückenbildung verringern.

14. System nach einem der Ansprüche 1 bis 13,
**dadurch gekennzeichnet,** daß
der untere Bereich (3) des Silos (1, 28), aus welchem die Zirkulationseinrichtung (10) das Schüttgut entnimmt, gegenüber den darüber liegenden Bereichen des Silos (1, 28) absperrbar und derart abnehmbar ausgebildet ist, daß die Zirkulationseinrichtung (10) von unten zugänglich ist.

15. System nach einem der Ansprüche 1 bis 14,
**dadurch gekennzeichnet**, daß
die Zirkulationseinrichtung (10) derart steuerbar, vorzugsweise intermittierend antreibbar ist, daß der Zirkulationsfluß einstellbar ist.

16. System nach Anspruch 15,
**dadurch gekennzeichnet,** daß
die Austragseinrichtung (9) hinsichtlich des Austragsflusses einstellbar ist.

17. System nach den Ansprüchen 15 und 16,
**dadurch gekennzeichnet**, daß
der Zirkulationsfluß in Abhängigkeit vom Austragsfluß einstellbar ist.

## Claims

1. A system for handling bulk material, comprising
- a silo (1, 28)
- a downwardly-tapering, substantially funnel-shaped portion (2) at the lower end of the silo (1, 28),
- a circulation device (10) which is arranged in the lower portion (2) and is for removing bulk material in a lower region (3) of this portion (2) so as to convey it to a higher region of the silo (1, 28) which is however located below the maximum filling height thereof, and
- a discharge device (9) which is connected to the circulation device (10) and is for discharging materials from the silo (1, 28),
characterised in that
- the discharge device (9) is furthermore for discharging materials from the upwardly-conveyed material stream during circulation conveying from the circulation device (10), and in that
- the circulation device (10) comprises a covering device (15) which is such that the bulk material can issue from the upper end of the circulation device (10) substantially free from pressure of the bulk material in the silo (1, 28).

2. A system in accordance with Claim 1, characterised in that the silo (1, 28) is detachable from and attachable to the lower portion (2).

3. A system in accordance with Claim 1 or 2, characterised in that a shut-off device (32) is provided on the silo (1, 28) substantially in the region in which it is detachable from and attachable to the funnel-shaped portion (2), the shut-off device (32) being arranged and formed in such a manner that, with closure thereof, the silo (1, 28) filled with bulk material can be handled separate from the portion (2) as a bulk-material container, in particular can be transported on an appropriately equipped vehicle.

4. A system in accordance with Claim 2 or 3, characterised in that devices (34) are provided on the detachable silo (1, 28) for the handling and transportation thereof.

5. A system in accordance with Claim 4, characterised in that the devices are formed by receivers (34) into which complementary devices of transporting equipment, in particular fork elements of a fork lift truck, can engage for transportation purposes.

6. A system in accordance with any one of Claims 1 to 5, characterised in that the circulation device (10) is arranged substantially in the centre of the silo (1, 28).

7. A system in accordance with any one of Claims 1 to 6, characterised in that the circulation device (10) comprises a conveying line (11) in which a conveying device (14) is arranged in such a manner that the bulk material is conveyed from the lower end (12) of the conveying line (11) to the upper end (13) thereof, the upper end (12) being covered by the covering device (15).

8. A system in accordance with Claim 7, characterised in that the covering device (15) comprises a casing (17) which is open at the bottom, surrounds the conveying line (11) in a substantially concentric manner and is closed at its upper end by a cap (16) which is preferably in the form of a pointed cone.

9. A system in accordance with Claim 7 or 8, characterised in that the discharge device (9) comprises a discharge line (25 sic, recte 9') opening into the conveying line (11).

10. A system in accordance with any one of Claims 1 to 9 , characterised in that the discharge device (9) is a suction conveyor.

11. A system in accordance with any one of Claims 1 to 9, characterised in that the circulation device (10) is a screw conveyor, agitating vanes preferably being provided at the lower end of the screw conveyor.

12. A system in accordance with any one of Claims 1 to 11, characterised in that the circulation device (10) extends over substantially the entire height of the funnel-shaped portion (2).

13. A system in accordance with any one of the preceding Claims, characterised in that the circulation device (10) is connected to the funnel-shaped portion (2) via substantially perpendicular dividing walls (5 to 8) reducing the stress of the bulk material and thereby reducing bridging.

14. A system in accordance with any one of Claims 1 to 13, characterised in that the lower region (3) of the silo (1, 28), from which the circulation device (10) removes the bulk material, can be shut off in relation to the regions of the silo (1, 28) located thereabove and is detachable therefrom in such a manner that the circulation device (10) is accessible from below.

15. A system in accordance with any one of Claims 1 to 14, characterised in that the circulation device (10) is controllable in such a manner, preferably driveable in an intermittent manner, that the circulation flow is adjustable.

16. A system in accordance with Claim 15, characterised in that the discharge device (9) is adjustable with respect to the discharge flow.

17. A system in accordance with Claims 15 and 16, characterised in that the circulation flow is adjustable as a function of the discharge flow.

## Revendications

1. Système de manutention de matière en vrac comprenant
- un silo (1,28)
- une section (2) en l'extrémité inférieure du silo (1,28), section en forme sensiblement d'entonnoir se rétrécissant vers le bas,
- un dispositif de mise en circulation (10) agencé dans la section inférieure (2) et conçu pour enlever de la matière en vrac dans une zone inférieure (3) de cette section (2) pour l'amener dans une zone située plus au-dessus du silo (1,28) mais en dessous de sa hauteur maximale de remplissage, et
- un dispositif d'évacuation (9) en liaison avec le dispositif de mise en circulation (10) conçu pour évacuer le matériau hors du silo (1,28)
caractérisé en ce que
- le dispositif d'évacuation (9) est de plus conçu pour évacuer le matériau hors du flux de matériau induit vers le haut lors de la circulation de transport engendrée par le dispositif de mise en circulation (10), et en ce que
- le dispositif de mise en circulation (10) comprend un dispositif de couverture (15) conçu de telle sorte que le matériau en vrac peut sortir hors de l'extrémité supérieure du dispositif de circulation (10) en étant sensiblement libre de toute pression du matériau en vrac contenu dans le silo (1,28).

2. Système selon la revendication 1, caractérisé en ce que le silo (1,28) peut être séparé de la section inférieure (2) et peut être installé sur celle-ci.

3. Système selon la revendication 1 ou 2, caractérisé en ce qu'un organe d'arrêt (32) est prévu dans le silo (1,28) sensiblement dans la zone où il peut être séparé de la section en forme d'entonnoir (2) et installé sur celle-ci, dans lequel l'organe d'arrêt (32) est conçu et agencé de telle sorte que, avec l'organe d'arrêt (32) fermé, le silo (1,28) rempli de matériau en vrac est manipulable en tant que cuve de transport de matériau en vrac séparé de la section (2), notamment peut être transporté sur un véhicule adapté en conséquence.

4. Système selon la revendication 2 ou 3, caractérisé en ce qu'il est prévu sur le silo (1,28) démontable des dispositifs (34) servant à sa manipulation et à son transport.

5. Système selon la revendication 4, caractérisé en ce que les dispositifs (34) sont formés d'ouvertures dans lesquelles peuvent venir en prise à des fins de transport des dispositifs complémentaires d'un outil de transport, en particulier un élément de fourche d'un chariot élévateur à fourche.

6. Système selon les revendications 1 à 5, caractérisé en ce que le dispositif de circulation (10) est agencé sensiblement au centre du silo (1,28).

7. Système selon l'une des revendications 1 à 6, caractérisé en ce que le dispositif de circulation (10) comprend un conduit de transport (11) dans lequel est agencé un dispositif de transport (14) de telle sorte que le matériau en vrac est transporté de l'extrémité inférieure (12) du conduit (11) en son extrémité supérieure (13), dans lequel l'extrémité supérieure (13) est couverte par le dispositif de couverture (15).

8. Système selon la revendication 7, caractérisé en ce que le dispositif de couverture (15) comprend une enveloppe (17) ouverte vers le bas entourant le conduit de transport (11) de manière sensiblement concentrique, et est fermé en son extrémité supérieure par une calotte (16) avantageusement en forme de pointe de cône.

9. Système selon la revendication 7 ou 8, caractérisé en ce que le dispositif d'évacuation (9) comprend un conduit d'évacuation (25) débouchant dans le conduit de transport (11).

10. Système selon l'une des revendications 1 à 9, caractérisé en ce que le dispositif d'évacuation (9) est réalisé sous la forme d'un transporteur par aspiration.

11. Système selon l'une des revendications 1 à 9, caractérisé en ce que le dispositif de mise en circulation (10) est réalisé sous la forme d'un transporteur à vis sans fin, dans lequel sont de préférence prévues des ailettes de brassement en l'extrémité inférieure de la vis transporteuse.

12. Système selon l'une des revendications 1 à 11, caractérisé en ce que le dispositif de mise en circulation (10) s'étend sensiblement sur toute la hauteur de la section (2) en forme d'entonnoir.

13. Système selon l'une des revendications précédentes, caractérisé en ce que le dispositif de mise en circulation (10) est relié à la section (2) en forme d'entonnoir par des parois de séparation (5 à 8) sensiblement à angle droit, qui atténuent les contraintes du matériau en vrac et ainsi le développement du point de rupture.

14. Système selon l'une des revendications 1 à 13, caractérisé en ce que la zone inférieure (3) du silo (1,28), à partir de laquelle le dispositif de mise en circulation (10) extraie le matériau en vrac, peut être isolée et ainsi démontée par rapport à la zone du silo (1,28) située au-dessus de telle sorte que le dispositif de mise en circulation (10) est accessible par en dessous.

15. Système selon l'une des revendications 1 à 14, caractérisé en ce que le dispositif de mise en circulation (10) peut être piloté, avantageusement peut être mis en oeuvre de manière intermittente, de telle sorte que le flux de circulation soit réglable.

16. Système selon la revendication 15, caractérisé en ce que le dispositif d'évacuation (9) peut être réglé en regard du flux d'évacuation.

17. Système selon les revendications 15 et 16, caractérisé en ce que le flux de circulation peut être réglé en dépendance du flux de circulation.
